(19) Europäisches Patentamt
European Patent Office
Office européen des brevets

(11) **EP 3 771 899 A1**

(12) **EUROPEAN PATENT APPLICATION**

(43) Date of publication:
**03.02.2021 Bulletin 2021/05**

(51) Int Cl.:
*G01N 15/14* *(2006.01)*

(21) Application number: **20188702.3**

(22) Date of filing: **30.07.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.07.2019 LU 101338**

(71) Applicant: **Diatron MI PLC
1097 Budapest (HU)**

(72) Inventor: **SVARCZ, Miklós Zsolt
1097 Budapest (HU)**

(74) Representative: **Tegethoff, Sebastian
Fortmann Tegethoff Patent- und Rechtsanwälte
Oranienburger Straße 39
10117 Berlin (DE)**

(54) **FLOW CYTOMETER**

(57)    The present invention relates to a flow cytometer for in vitro assaying of human or animal whole blood and to an investigation method using the flow cytometer.

**FIG. 1**

**Description**

Field of the Invention

The present invention relates to a flow cytometer for in vitro assaying of human or animal whole blood and to an investigation method using the flow cytometer.

Brief description of the related art

Flow cytometers are laboratory devices used for performing rapid multi-parametric assaying of cells. The technique allows to detect, analyze and separate each cell type within a mixed cell population based on phenotypes or functional states. Flow cytometers are able to determine a part of the parameters through optical based measurements. The technique is based on the analysis of scattered or absorbed polarized light to determine populations of the cellular components. Published U.S. Patent No. 7,113,266 teaches such a technique.

Moreover, by means of an optical based measurement, the size and the granularity of various formed elements (i.e. red blood cells, blood platelets, white blood cells, such as lymphocytes, monocytes, granulocytes, etc.) of a given sample can be measured simultaneously. Such samples can be provided in the form of a human or animal whole blood sample for instance.

Microfluidic devices used for flow cytometry are also known. Published U.S. Patent Application No. US 2009/0066936 A discloses a microfluidic device comprising inlets for a sample flow and an out-of-plane focusing sheath flow, and further a curved channel section configured to receive the sample flow and out-of-plane focusing sheath and to provide hydrodynamic focusing of the sample flow in an out-of-plane direction, the out-of-plane direction being normal to a plane including the curved channel. The provided device uses a turning flow channel.

U.S. Patent No. US 7,638,39 teaches a micro-fluidic device containing a micro-fluidic inlet channel to convey a process flow, a plurality of micro-fluidic focusing channels to each convey one of a plurality of focusing flows, a focusing manifold coupled with the inlet channel at an inlet port thereof and with the plurality of focusing channels at a plurality of focusing channel ports thereof to focus the process flow by contacting and hydrodynamically impacting at least three sides of the process flow with the focusing flows, and a micro-fluidic outlet channel coupled with the focusing manifold at an outlet channel port to convey the combined focused process flow and focusing flow from the focusing manifold.

In published U.S. Patent Application No. US 2004/0043506 A1 an apparatus that includes a body structure having a plurality of microfluidic channels fabricated therein is disclosed, wherein the plurality of microfluidic channels comprises a center channel and focusing channels in fluid communication with the center channel via a plurality of cascaded junctions. Also disclosed herein is a method that includes the step of providing a body structure having a plurality of microfluidic channels fabricated therein, the plurality of microfluidic channels comprising a center channel and focusing channels in fluid communication with the center channel via a plurality of cascaded junctions. The method also includes the steps of providing a flow of the sample fluid within the center channel, providing flows of sheath fluid in the focusing channels, and controlling or focusing the flow of the sample fluid by adjusting the rate at which the sheath fluid flows through the focusing channels and cascaded junctions, and into the center channel. The disclosed apparatus and method can be useful to control or to focus a flow of a sample fluid in a microfluidic process are dis closed. Additionally, the apparatus and method can be useful to detect molecules of interest in a microfluidic process.

U.S. Patent No. US 4,988,619 describes an obstruction across the flow chamber creates a one-dimensional convergence of a sheath fluid. A passage way in the construction directs flat cells near to the area of one-dimensional convergence in the sheath fluid to provide proper orientation of flat cells at fast rates.

In U.S. Patent No. US 5,007,732 a sheath flow type flow-cell device for flow-cytometer is disclosed, which comprises a first inlet for sheath fluid, a flow passage communicated with the first inlet and contracted toward downstream, the flow passage having a substantially rectangular cross section, a straight capillary flow passage connected to the flow passage down, stream thereof, the capillary flow passage having a substantially rectangular cross section, a second inlet for sample fluid, a nozzle communicating with the second inlet and opened within the flow passage in the same direction as the flow direction of the straight capillary flow passage, a discharge port provided at a terminal end of the straight capillary flow passage, and flow regulating means for regulating the flow of the sheath fluid in the straight capillary flow passage to be a laminar flow having a gradient of flow velocity.

U.S. Patent No. US 5,150,037 teaches a particle detector that is designed to detect particles 100 such as cells and blood corpuscles, and this particle detector includes means for passing and recovering a multilayer flow consisting of an inner layer A of conductive liquid specimen, a middle layer B of conductive first sheath liquid, and an outer layer C of nonconductive second sheath liquid surrounding them, in an orifice 12, and a pair of electrodes disposed on both sides of the orifice so as to contact the conductive liquid respectively. A detector circuit is connected to the pair of electrodes so as to detect a particle 100 signal on the basis of difference of electric impedance between the electrodes. The diameter of the orifice is substantially the diameter of the middle layer. By varying the flow rate balance of the conductive liquids and on conductive liquid, the diameter of the middle layer may be freely changed. Accordingly, the diameter.

In U.S. Patent No. US 5,985,216 A a sorting nozzle disclosed having two tapered zones with elliptical cross-sections being able to orient and sort a large fraction of asymmetrical or flattened cells. The disclosed nozzle has a particular application for sorting viable male and female sperm populations in a cell sorter.

U.S. Patent No US 6,365,106 B1 describes a sheath flow cell includes a cell having a guide hole with an inlet and an outlet for guiding a sheath liquid. The cell has a rectifying section, an accelerating section and an orifice section having a cylindrical through-hole, a cone-shaped through-hole tapered toward the outlet and a prism-shaped through-hole with a square shaped section, respectively. The cylindrical, cone-shaped and square prism-shaped through holes serially and smoothly communicating to each other so as to define the guide hole. There is a sample liquid supply nozzle having a cylindrical shape and extending from the inlet toward the accelerating section co-axially with the through-hole of the rectifying section. The through-hole of the orifice section has a cross section having a side length along its length square of 0.1 mm to 0.4 mm and the through-hole of the rectifying section has an axial length four or more times greater than its inner diameter.

Some systems known from the prior art use an expensive pigtailed laser source or anamorphic elements and a collimator for creating the circular parallel beam. The optical elements may contain two cylindrical lenses perpendicular to each other for beam shaping, this solution is likely more sensitive for the centering and angular positioning of the lenses. In such a system, it is not possible to turn around the first cylindrical lens. Such solutions have the disadvantage of being less robust.

A photomultiplier tube (PMT) or an avalanche photodiode (APD) module are often used for detection. The disadvantage of the PMT is the eight times higher costs in comparison to a multi-element avalanche photodiode array, a shorter life time, and bigger mechanical and optical sensitivity. The disadvantages of the APD are lesser sensitivity due to not being able to count single photons or the too high response time if it is in Geiger mode.

Another disadvantage of known systems is related to the concentric round sample flows, having a diameter parallel and perpendicular to the laser beam that is identical. The diameter of the flow is thus limited perpendicular to the laser beam, because the laser spot is Gaussian and the power density of the laser beam depends on the distance from the center line of the sample flow. The wide flow results in an unacceptable laser illumination of the particles. The width and the depth of the flow is limited by the laser spot and the speed of the flow is limited by the Reynolds number inside the flow cell, so the sample flow volume is limited.

Typical solution from the prior art further use segment detectors and sphering agents to sphere the cells for randomizing influences of spatial situations of cells during measurement. The measured mean volume is not related to the native shape, because the shape is changed by the sphering agent. Atypical cell forms are resulting from chemical caused puffing of the cells. An into the cell introduced fluorescent dye may remain asymmetrically positioned despite the spherical shape of the cell's envelope producing noise in the detector.

Object of the Invention

It is an object of the present invention to provide a detector for flow cytometry that allows for measurement of an element's volumes independent from the element's shape.

Summary of the Invention

The present disclosure provides an optical flow cytometer for performing assays in vitro with cellular components in a liquid sample, comprising

a. an optical unit (14) for illuminating a sample, said optical unit (14) comprising an elliptical divergent laser beam source for generating a laser beam (32), a collimating laser optic, a plano-convex lens and a cylindrical lens, and
b. a unifying element (66) connected to a flow cell (22) at a connection plane (204) of the flow cell (22), wherein the flow cell (22) and the unifying member (66) comprises a common furcating flow channel from the end point of the flow cell (22) crossing the connection plane (204) of the flow cell (22) to the entry points of the unifying member (66), wherein the flow cell (22) has at its connection plane a circular or quadrant shape and the unifying member (66) comprises a first section between an entry point for a liquid sample flow (205) and a sheath flow (206) on one end and an end plate of a sample injector (203) and a second section between the end plate of the sample injector (203) and the connection plane of the flow cell (204), wherein

i. the first section of the unifying member (66) comprises a sample injector (200) that is connected to a sample branch (62) at the entry point, wherein the sample injector (200) is concentrically and symmetrically located within a sheath preparation element (201), wherein the inner diameter of the sample injector (200) for transporting the liquid sample flow is constant, and wherein the sheath preparation element (201) has a symmetrical shape at its connection with a sheath liquid branch (63) at the entry point, and the diameter of the sheath preparation element (201) decreases continuously towards the entry of a passage (22a) of flow cell (22) for the liquid sample at least in the direction of the axis of the illuminating laser beam; and

ii. the second section of the unifying member (66) comprises a common flow formation element (202) that conically reduces its inner diameter in direction towards the connection plane of the flow cell (204), wherein the openings of sample injector (200) and sheath preparation element (201) merge into the common flow formation element (202) so that the sheath flow surrounds the liquid sample flow in a resulting composite stream and wherein the cross section of the flow formation element (202) is asymmetrical with the longer extension of the cross section being perpendicular arranged to the optical axis of a laser beam, at least at the end plat of the sample injector (203).

In a further aspect, the flow cell can be made of a transparent material.

In a further embodiment, the shape of the end plate of sample injector can be circular or rectangular.

In a further aspect, the light path of the laser beam 32 can be perpendicular to a passage for the sample in the flow cell.

It is further envisaged that the optical flow cytometer may comprise a detection unit for evaluating and controlling the sample, said detection unit comprising a multi element with avalanche photo diode array and detector member, wherein the multi element with avalanche photo diode array, detector module may be connected to a low pass filter for transmitting a pulse output.

The optical unit and the detection unit may share a common optical axis in a further embodiment.

It is further envisaged that the optical flow cytometer may comprise at least a first optical coupling element capable of collecting beams exiting from the flow cell.

In a further embodiment, the flow cytometer may comprise a second optical coupling element that is rotated by ninety degree in relation to the first optical coupling element and is capable of collecting light exiting from the flow cell.

The optical flow cytometer may comprise in a further aspect a first and a second optical sensing element of first and second optical coupling element, which are capable of generating electrical signals in conformity with the spatial distribution of the beams incident on said first or second sensing surface.

It may further be intended that the optical flow cytometer comprises a signal processing unit electrically connected with at least one optical sensing element.

It is further envisaged that the cross section in the end plate of the injector can be elliptical and the cross section of the connection plane of flow cell can be circular.

Another object of the invention refers to the use of a flow cytometer according to any one of claims 1 to 13 for measuring simultaneously in vitro at least one property of an element or cellular component of a biological sample, wherein the at least one property is selected from the group comprising size, shape, internal granularity, maturity and corpuscular volume.

Finally, the invention refers to a method for fixing the angular position of prepared asymmetric particles 100 to the 'plane flow' and to the illuminating laser beam 32

Still other aspects, features, and advantages of the present invention are readily apparent from the following detailed description, simply by illustrating a embodiments and implementations. The present invention is also capable of other and different embodiments and its several details can be modified in various obvious respects, all without departing from the spirit and scope of the present invention. Accordingly, the drawings and descriptions are to be regarded as illustrative in nature, and not as restrictive. Additional objects and advantages of the invention will be set forth in part in the description which follows and in part will be obvious from the description, or may be learned by practice of the invention.

Summary of the Figures

The invention will be described based on figures. It will be understood that the embodiments and aspects of the invention described in the figures are only examples and do not limit the protective scope of the claims in any way. The invention is defined by the claims and their equivalents. It will be understood that features of one aspect or embodiment of the invention can be combined with a feature of a different aspect or aspects of other embodiments of the invention, in which:

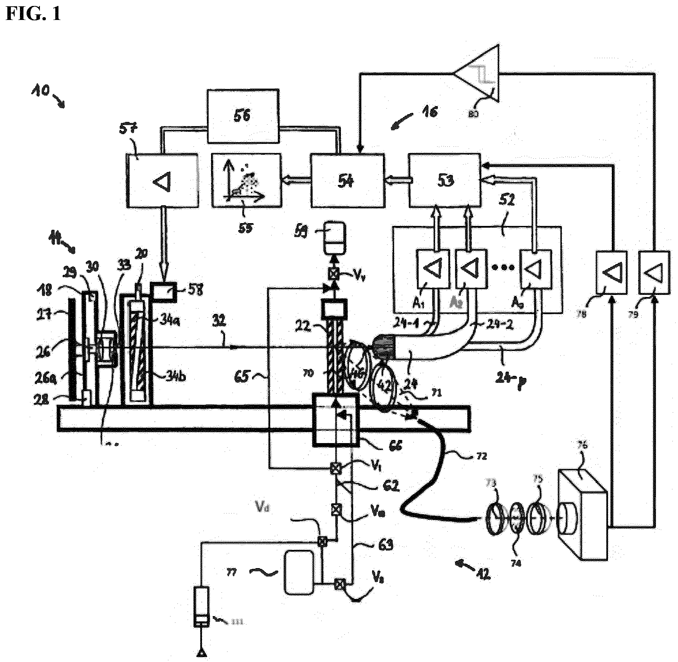

FIG. 1 shows a block diagram of a possible embodiment of the optical flow cytometer according to the invention. p represents the number of light offtake bundles (and, hence, of detecting conical angle ranges).

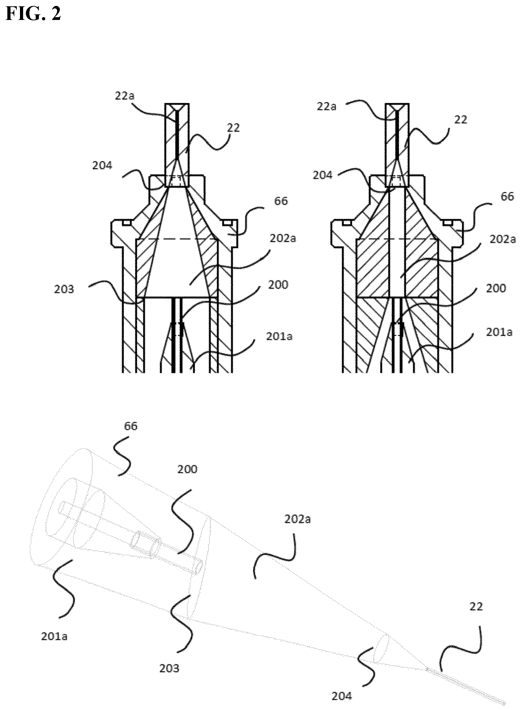

FIG. 2 shows a structural drawing and longitudinal sectional views, parallel and perpendicular to the laser beam 32, of the unifying element 66 and the flow cell 22 shown in Figure 1, wherein said embodiment comprises: sample injector 200 and a truncated cone shape sheath preparation element with circular to elliptical shrinking cylindrical shape 201a where the major axis of the ellipse is perpendicular to the plate flow, and common flow formation element with modified truncated cone shape 202a where the cross section in the end plate of the injector 203 is elliptical and the cross section in the connection plane of the flow cell 204 is circular.

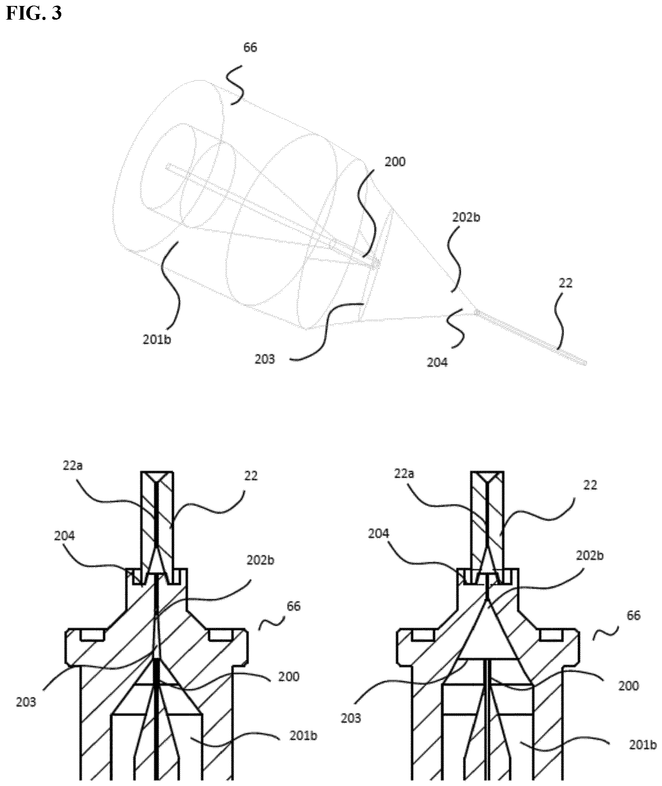

FIG. 3 depicts a structural drawing and longitudinal sectional views, parallel and perpendicular to the laser beam 32, of cell connector element 66 and flow cell 22 shown in FIG. 1 , wherein said embodiment comprises: sample injector 200 and a sheath preparation element with circular to elliptical shrinking truncated conical shape 201b where the major axis of the ellipse is perpendicular to the plate flow and the ratio of the small axis and the major axis of the ellipse is one to eight, and common flow formation element 202b with modified truncated cone shape where the cross section in the end plate of the injector 203 is elliptical the cross section in the connection plane of the flow cell 204 is circular;

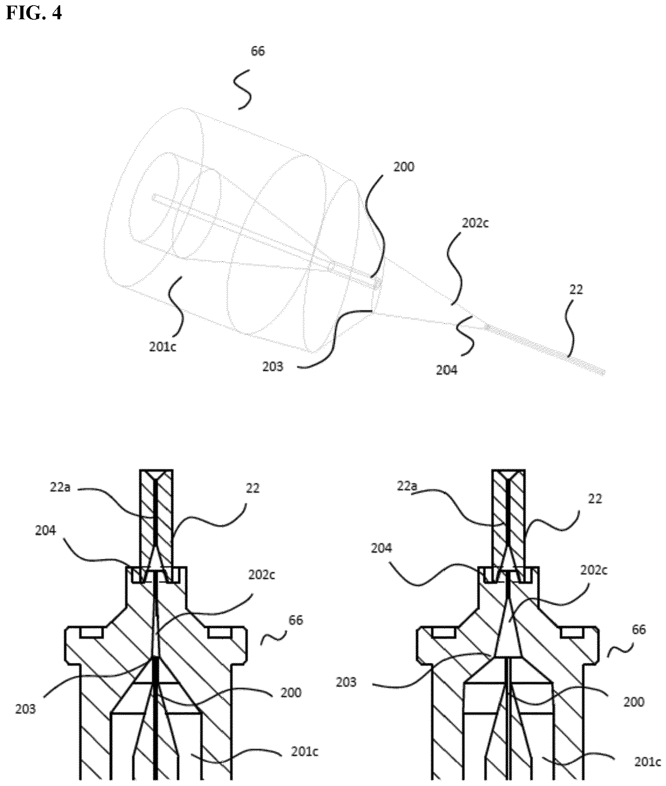

FIG. 4 is a structural drawing with longitudinal sectional views, parallel and perpendicular to the laser beam 32, of the cell connector element 66 and the flow cell 22 shown in FIG. 1 , wherein said embodiment comprises: sample injector 200 and a sheath preparation element with circular to elliptical shrinking truncated conical shape 201c where the major axis of the ellipse is perpendicular to the plate flow and the ratio of the small axis and the major axis of the ellipse is one to four, and common flow formation element 202c with modified truncated cone shape where the cross section in the end plate of the injector 203 is elliptical the cross section in the connection plane of the flow cell 204 is circular;

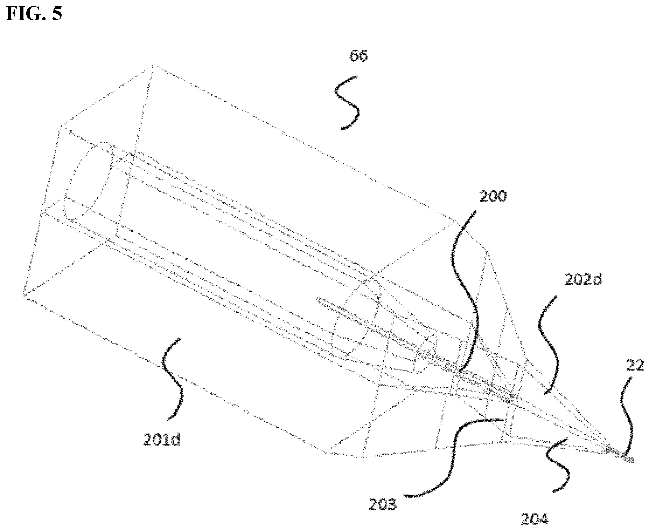

FIG. 5 is a structural drawing, of the cell connector element 66 and the flow cell 22 shown in FIG. 1, wherein said embodiment comprises: sample injector 200 and a sheath preparation element with square to rectangle shrinking truncated pyramid shape 201d where the major edge of the rectangle is perpendicular to the plate flow, and common flow formation element 202d with modified truncated pyramid shape where the cross section in the end plate of the injector 203 is rectangle the cross section in the connection plane of the flow cell 204 is square;

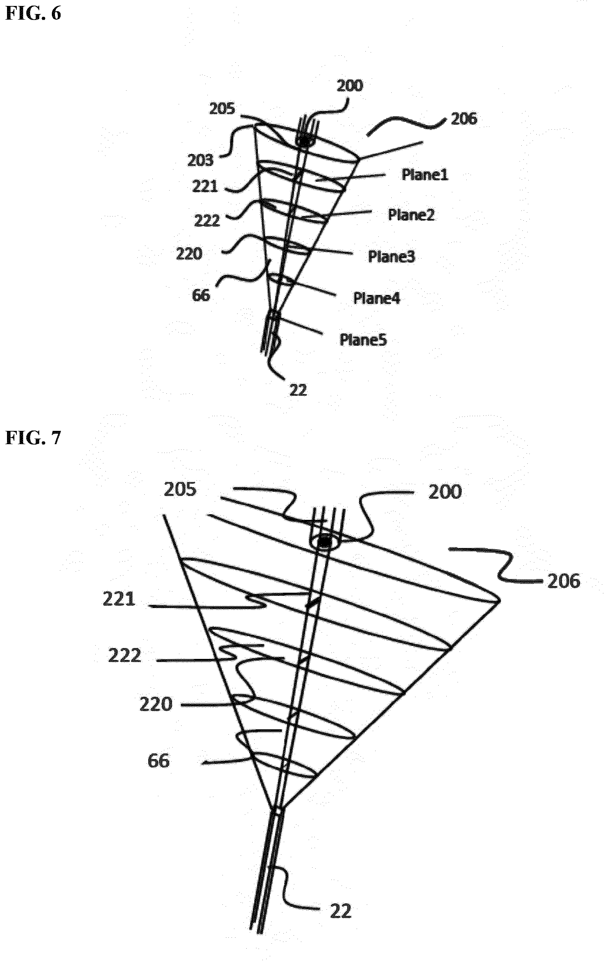

FIG. 6 is a cross sectional view (in five different planes perpendicular to the sample flow) of the combined flow 220 inside of the cell connector element 66 shown in FIG. 4, the sample flow area 221 is marked by black and the sheath flow area 222 is marked by white from the sample injector plain to the connection plain of the flow cell 204.

FIG. 7 is a cross section view (in five different planes perpendicular to the sample flow) of the combined flow 220 inside of the cell connector element 66 shown in FIG. 3, the sample flow area 221 is marked by black and the sheath flow area 222 is marked by white from the sample injector plain to the connection plain of the flow cell 204.

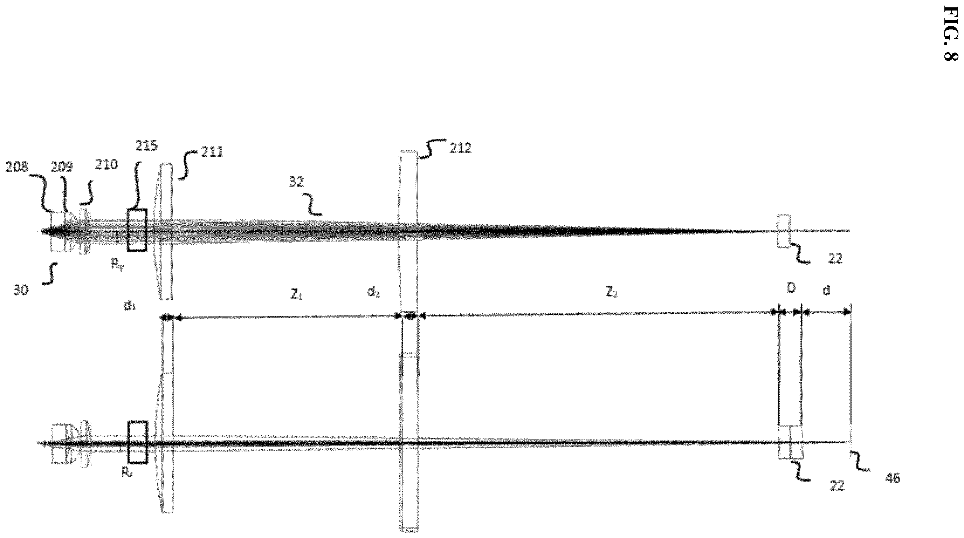

FIG. 8 is the vertical and horizontal cross section view of the possible embodiment of the optical system shown in FIG. 1 in the plan of laser beam 32. There are the laser source 26 and three lens collimator 30 (consist of plan 208, meniscus 209, biconvex 210 lenses) and clean up filter 215 the plan-convex 211 and the cylindrical lens 212 shown in Figure 1. Where the following markings exist: Rx the half width of the collimated beam measured between the 1/e2 intensity points in horizontal direction, Ry the half width of the collimated beam measured between the 1/e2 intensity points in vertical direction, d1 edge thickness of the plano-convex lens 211, d2 edge thickness of the cylindrical lens 212, Z1 the distance between the plano-convex lens 211 and the cylindrical lens 212, Z2 the distance between the cylindrical lens 212 and the flow cell 22, D thickness of the flow cell 22, d distance between the flow cell 22 and the beam stopper plate 46.

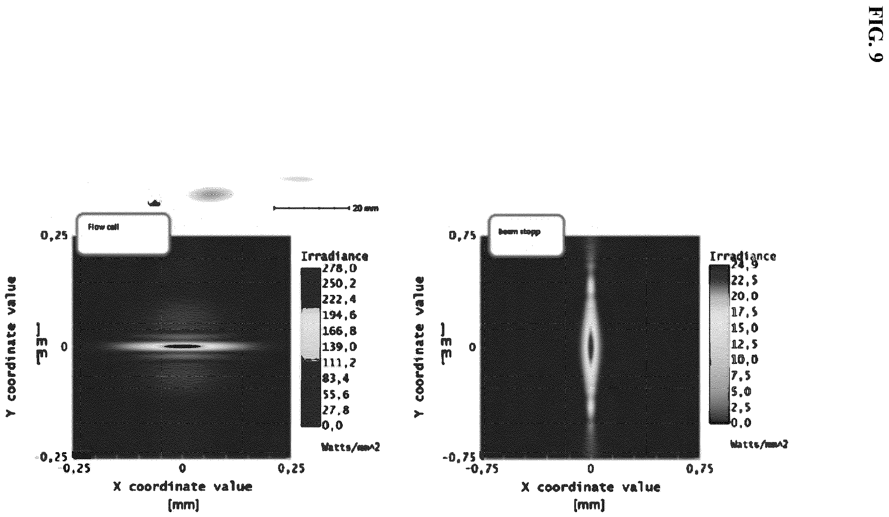

FIG. 9 is a power distribution function of the laser beam 32 depending on the vertical and horizontal distance from the center of the laser beam 32 in the connection plain of the flow cell 204 and detector in case of the laser source and three lens collimator and beam shaping lenses 33 shown in FIG. 8. Where the following markings exist: rx the half width of the illumination beam measured in the vertical plan of flow cell between the 1/e2 intensity points in horizontal direction, ry the half width of the illumination beam measured in plane of beam stopper plate 46, between the 1/e2 intensity points in vertical direction.

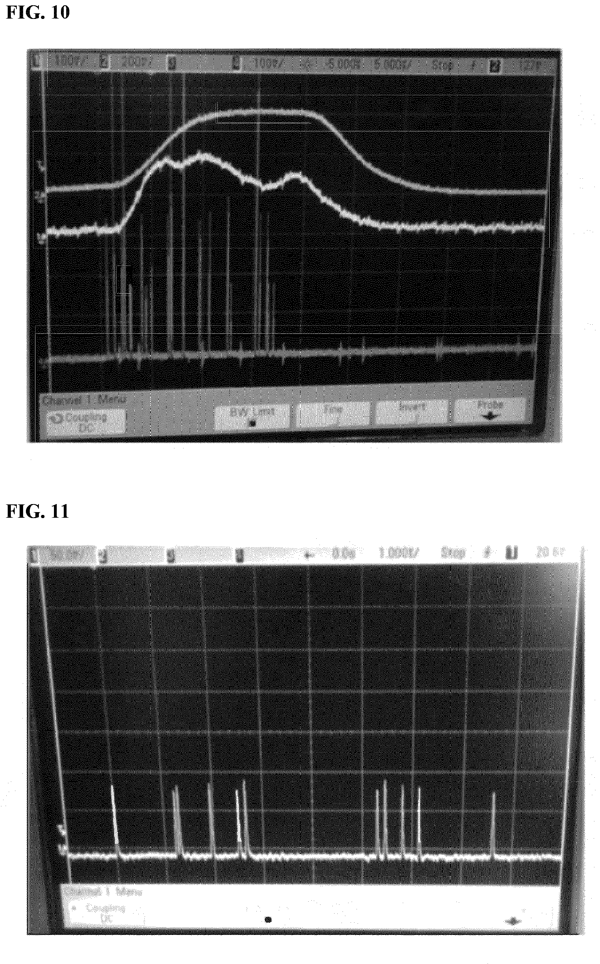

FIG. 10 is an output voltage function of the multi-element avalanche photodiode array module 76 pulse output and the low pass filter output shown in Figure 1 depending on time, in that case a particle 100 move across the laser beam 32 in the flow cell 22, the magenta is the pulse output of multi-element avalanche photodiode array and the green is the output of the LPF.

FIG. 11 is an output voltage function of the multi-element avalanche photodiode array module 76 shown in FIG. 1 depending on time, in case of low detected light level. The yellow is the voltage of the pulse output.

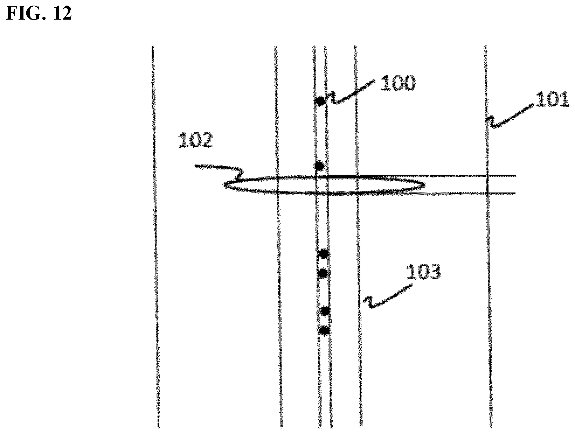

FIG. 12 is a laser beam 32 position on the flow cell 22 shown on FIG. 1.

Detailed Description of the Invention and the Figures

The technical problem is solved by the independent claims. The dependent claims cover further specific embodiments of the invention.

The present invention describes an optical flow cytometer for performing assays in vitro with cellular components in a liquid sample.

The invention will now be described on the basis of the drawings. It will be understood that the embodiments and aspects of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

FIG. 1 illustrates an embodiment of an optical flow cytometer 10 according to the invention that serves for a simultaneous and in vitro measurement of several properties (size, internal granularity, maturity, corpuscular volume etc.) of a biological sample, for example of formed elements or further cellular components witch can be spherical and asymmetrical particles 100, in human or animal whole blood mixed up with one or more reagents chosen from a broad range of reagents, or colored with available fluorescent dyes or mixed with sphering agent.

Said flow cytometer 10 basically comprises three major components that are cooperating with one another: a hydro-pneumatic unit 12 for preparing a solution of the biological sample reacted with proper reagents or available fluorescent dyes or sphering agents and transporting it to the location of the assay; an optical unit 14 for providing an appropriate illumination of the sample solution during measurement, as well as for collecting and directing the light that is scattered by said sample and collecting the emitted fluorescence light that is eradiated from said colored sample and carries and separate information associated with the properties of the formed elements of the sample to the sensing element(s); and a controlling and evaluating unit (16) that processes the electrical signals of said sensing element(s) generated by the incident light directed to said sensing element(s) and uses at least a part of the thus obtained pieces of information to control the operation of the optical unit 14 and/or to determine desired properties of the formed elements.

The optical unit 14 comprises a transmitter module 18 providing the illumination needed for the measurement to be performed, an optional beam moving device 20, a flow cell 22 and an optical fiber bundle 24 or a direct light detector, all arranged in a light path, and rectangular light collector module collect the light emitted or scattered from the said colored or not colored symmetrical or asymmetrical particles 100 and transmit a part of this light into the multi-element avalanche photodiode array detector or photodiode or avalanche photodiode detector. There are two embodiments: a first embodiment refers to an optical unit that comprises a fluorescent light collector module which has a filter module with a wave length dependent transfer function and a high sensitivity detector to be able to detect the light emitted from the particle 100 colored by the fluorescent dye, the other embodiment refers to an optical unit (14) that comprises a side scattered light collector module which has a low sensitivity detector enabling to detect the light scattered from the particle 100. The fluorescence light collector module comprises light collector elements 70 and fiber coupling elements 71 and an optical fiber 72 arranged perpendicular to the light path at the flow cell 22. The elements collect said light emitted or scattered perpendicular to the laser beam 32 from the particles 100 and couple it into said optical fiber 72. The optical fiber 72 transmits said emitted or scattered light to the filter module which contains a condenser lenses 73, 75 to create a parallel beam. One or more optical filter(s) 74 with wavelength dependent transmission coefficient and a coupling element are arranged in an optical axis which transmit the higher wavelength fluorescence light coming from the colored particles 100 into the multi-element avalanche photodiode array detector and block the lower wavelength scattered light coming from the particles 100 or coming from the laser source and reflected from the other optical elements like flow cell 22. The side scattered light collector module compresses light collector elements 70 arranged perpendicular to the light path at the flow cell (22). The elements collect light scattered from perpendicular with respect to the laser beam 32 from the particles 100 and couple the said photodiode or avalanche photodiode detector.

The transmitter module 18 comprises a laser source 26 (as illumination device), a driving circuit 27 to provide electric supply of said laser source 26, as well as a temperature stabilizing means 28 (a Peltier element for cooling and a resistive heater for heating; not shown in the Figures) for stabilizing the temperature of said laser source 26 based on a signal generated by a temperature sensor 29. The laser source provides an illuminating laser light at one or more wavelengths with a constant averaged or high frequency modulated light output.

Said laser source 26 is formed by one or more laser diodes emitting at different wavelengths, wherein said diode(s) is (are) arranged at a starting point of said light path. An optical axis of the optical unit 14 is defined by a straight line that extends from the laser source 26 to a common end 42 of said optical fiber bundle 24 or to directly to the detector.

In said light path, in the propagation direction of the laser light emitted by the laser source 26 there is provided a collimator 30 means forming part of the transmitter module 18 (it consist of three lenses: plan, meniscus, double-convex). Said collimator 30 means collimates the laser light. The collimated laser light has an elliptical shape spot, the big axis of the spot is parallel to the fast axis of the laser diode. There are clean up filter element to change the laser source intensity profile depend on the wave length. There is pass band close the wave length of laser source where the said laser beam 32 go throw the filter with the possible minimum absorption, and there is a stopband in the emitting wavelength of fluorescent dye where the said laser beam 32 go throw the filter with the possible maximum absorption depend on wavelength.

To focus and shape the collimated laser light vertically onto the flow cell 22 and horizontally onto the optional beam stopper plate 46 or the predefined area of the detector, a focusing and shaping means (in the form of a plano-convex and a cylindrical lens) is arranged in the light path after the collimator 30 means and the clean-up filter. The thus obtained laser beam 32 forms a spot 102 of an elliptic shape in a plane perpendicular to its propagation direction that illuminates the flow cell 22 in a pre-defined zone. The power density distribution of said laser beam 32 at the centerline of the flow cell 22 in said plane perpendicular to the light path is a Gaussian distribution (from now on Gaussian). The laser beam 32 goes throw the flow cell 22 and forms a spot of an elliptical shape in a plane perpendicular to its propagation direction that illuminates said beam stopper plate 46 or a specified area of the detector. The power density distribution of said laser beam 32 at the centerline of the beam stopper plate 46 or on the surface of the detector in a plane perpendicular to the light path is Gaussian.

The parameters of said design can be calculated by the thin lens model, which estimates the original lenses by a thin les and the plan parallel optical plate. The thickness of the plain is equal to the edge thickness of the original lenses. The axis of the used right-angle coordinate system is defined as follows: the propagation of the laser light z, the fast axis of the laser diode y, the slow axis of the laser diode x. There are the function of the distance between the plano-convex thin lens and the cylindrical thin lens z1 and distance between the cylindrical thin lens and flow cell 22 z2, depend on D, the refractive index of the flow cell 22 n, the distance between the flow cell and the beam stopper plate 46 d, the effective focal length of plano-convex lens f1, the effective focal length of the cylindrical lens in direction of y axis f2.

$$z_1 = \frac{1}{4n}\left(-\sqrt{D+2nd}\sqrt{D+2nd+8nf_2} - 2nd - D + 4nf_1\right)$$

$$z_2 = \frac{1}{4n}\left(\sqrt{D+2nd}\sqrt{D+2nd+8nf_2} - 2nd - 3D\right)$$

The original lens position $z_1'$, $z_2'$ are calculated taking into account the edge thickness of the plano-convex lens d1, the edge thickness of the cylindrical lens d2, the refractive index of the plano-convex lens n1, the refractive index of the cylindrical lens n2.

There are the functions of the half width of the laser beam 32 in the vertical plane of the flow cell in horizontal direction rx, the half width of the laser beam 32 in the plane of the beam stopper plate 46 in vertical direction measured in 1/e2 intensity ry depend on D, the refractive index of the flow cell 22 n, the distance between the flow cell 22 and the beam stopper plate 46 d, the effective focal length of plano-convex lens f1, the effective focal length of the cylindrical lens in direction of y axis f2, distance between the plano-convex thin lens and the cylindrical thin lens z1 and distance between the cylindrical thin lens and flow cell z2, the half width of the laser beam 32 in the plane of the cleanup filter in horizontal direction Rx, the half width of the laser beam 32 in the plane of the cleanup filter in vertical direction measured in 1/e2 intensity Ry.

$$r_x = \frac{f_1 - \frac{D}{2n} - z_1 - z_2}{f_1} R_x$$

$$r_y = \frac{(f_1 + f_2 - z_1)\left(d + \frac{D}{n} + z_2\right) + f_2(z_1 - f_1)}{f_1 f_2} R_y$$

In an embodiment of the cytometer shown in FIG. 1, the laser beam 32 exiting the transmitter module 18 falls on an automated beam moving device 20 arranged in the light path.

In a possible embodiment, the automated beam moving device 20 contains two rotatable prisms 74a,b in a plane perpendicular to the light path. This prism changes the direction of the laser beam 32 depending on its rotation angle. Consequently, after leaving the beam moving device 20, the laser beam 32 propagates in a direction that is defined by the flow cell 22 and the optical fiber bundle 24 or direct detector.

In a possible further embodiment, said beam moving device 20 is formed by the holder of the laser source 26 itself. In this case, the required propagation direction of the laser beam 32, that is the propagation direction defined by the flow cell 22 and the optical fiber bundle 24 is set by said holder by tilting the laser source 26 from a plane perpendicular to the optical axis in a given angle into the propagation direction of the laser beam.

The laser beam 32 which leaves the beam moving device 20 falls on the flow cell 22 of the optical unit 14. In its simplest possible embodiment, a prism-shaped oblong body forms the flow cell 22, wherein a flow passage 22a with a longitudinal extension is formed within the bulk of said body. Consequently, said body has a given wall thickness along the propagation direction of the laser beam 32. In general, the cross section of the flow passage 22a taken in a plane perpendicular to the length of the flow cell 22 has a rectangular shape. The diameter of the flow passage 22a ranges from at least 100 $\mu$m to at most several hundred $\mu$m, it is about 250 $\mu$m in size. The lower end of the flow passage 22a broadens so that it can be connected to the flow cell connector element 66.

The shape of this broadened connection is pyramidal or conical. As already described above, the laser beam 32 illuminates the flow cell 22 at the center-line of its passage 22a in a basically elliptical spot 102 (the illumination zone) with a horizontally and vertically Gaussian power density distribution. The lengths of the minor and the major axes of said elliptical spot 102 is between about 10 $\mu$m to about 50 $\mu$m and between about 150 $\mu$m to 400 $\mu$m, respectively. Said lengths are about 20 $\mu$m and about 200 $\mu$m, respectively, in size.

The flow cell 22 is arranged within the optical unit 14 so as to contain the flow passage 22a in a position basically perpendicular to the optical axis. Accordingly, the sample to be assayed flows within the flow cell 22 in a direction essentially perpendicular to the optical axis of the optical unit 14. The prisms forming the flow cells 22, are made of glass, quartz, or plastic materials, as well as of any suitable materials that are transparent at the wavelength(s) of laser light(s) emitted by the laser source 26 and transparent at wavelength of fluorescent light emitted by the fluorescent particle 100 of the sample and unaffected by the substances directed through said passages 22. A skilled person in the art will be able to choose appropriate materials.

Returning now to FIG. 1, during the measurement the sample to be assayed that flows through the passage 22a of the flow cell 22, wherein the objects 40 of the assay (depending on the sample, for example formed elements of whole blood or other cellular components and similar elements or fluorescently painted particles 100 witch can be symmetrical or asymmetrical) flow essentially in the centerline of the sample flow area 221 one by one and the asymmetrical particles 100 orientation is fixed to the laser and the detectors, as will be discussed later in detail.

During propagation, the objects 40 reach a region of the passage 22a that is illuminated by the laser beam 32 (that is, the illumination zone), wherein a part of the laser light striking said objects 40 scatters to all directions of space according to a given distribution (i.e. in a given pattern). As it is well-known, the objects 40 differing in size and shape and also having optionally an internal structure or asymmetric shape scatter the striking light to a various extent into different spatial directions. From the analysis of the scattered light with respect to the spatial pattern, for example by given conical angle ranges, a conclusion can be made with regard to the sought properties of said objects 40.

To this end, as a next step of the measurement there is a need for collecting the laser light scattered into the various spatial regions. This is the task of the optical fiber bundle 24 that has a (common) frontal end 42 with a particular shape or a direct detector that has separated regions. Depending on the number of different spatial regions selected for a study of the objects 40 (consisting of e.g. the cellular components), the optical fiber bundle 24 is split into a plurality of separate offtake bundles 24-1, 24-2,..., 24-p, wherein every single offtake bundle 24-1, 24-2,..., 24-p transmits laser light scattered into a certain spatial region under study and collected therefrom to the controlling and evaluating unit 16, the components of which will be discussed later. In case of direct detector it has 1,2,.., p separate area wherein every single separate area of the direct detector converts the laser light scattered into a certain spatial region to electrical signals and this signals come to the input of the amplifier module 52.

Fluorescent dyes are well known for coloring cellular elements of a whole blood sample in a different degree, depending on the physical, chemical and biological properties of said elements. Physiologic properties like maturity of cellular elements have influence on said physical, chemical and biological properties and thus modify the degree of fluorescence. A part of the laser light hits objects or other cellular components of a whole blood sample during its propagation through the centerline of the sample flow area 221. A fluorescent dye will be excited by said laser light and a part of the energy of the laser light will be emitted back with a longer wavelength fluorescent light. The intensity of the emitted fluorescent light from the colored particle 100 depends from the physiological properties of said particles 100.

The optical fiber bundle 24 is built up of per se known elementary optical fibers made of glass or a plastic material, wherein the diameters of each optical fiber ranges from about 70 $\mu$m to about 500 $\mu$m. The elementary optical fibers are located closely to each other, accordant to the most compact space filling scheme and are coupled to each other by bonding or sintering. Consequently, the geometrical losses among the optical fibers are minimal. The frontal end 42 of the optical fiber bundle 24 is divided into (ring-shaped) regions by means of separating plates 45. Optical fibers belonging to the respective regions form the offtake bundles 24-1, 24-2, ... , 24-p (FIG. 1) that are connected to said controlling and evaluating unit 16. The optical fiber bundle 24 is equipped with an elongated beam stopper plate 46 extending perpendicular to the optical axis on its frontal end 42.

In a possible further embodiment, the optical fiber bundle 24 comprises a central offtake bundle 47 of elliptical shape instead of said beam stopper plate 46. The task of the beam stopper plate 46 and the elliptical-shaped bundle 47 is to obstruct the path of illuminating light reaching directly (that is, without being scattered) said frontal end 42 by excluding and receiving/leading away, respectively, of said light.

The detector is formed by individual detectors (having a ring or ring segment shape). The individual detectors are connected with the input of the analogue amplifier module 52. The output of the analogue amplifier is connected to the controlling and evaluating unit. In an embodiment, the detector is divided into four individual detector, wherein the first individual detector collects the direct light arising from the illuminating laser light. The second, third and the fourth individual detector collect scattered light scattered in different directions by an object 40 passing through the centerline of the Gaussian laser beam 32.

Returning now to FIG. 1, the collected laser light is transmitted by said optical fiber bundle 24 and will be received by the controlling and evaluating unit 16, more precisely the collected light will be received by analogue amplifier module 52, which is a multichannel amplifier module 52. On its input, said amplifier module 52 comprises sensing elements or detectors Aj, ..., Ap (PIN type or avalanche photodiodes; not shown in the Figures), one for each channel, that are connected to transimpedance amplifiers. Referring to the detector, the laser light coming from spatial regions enters the individual photodiodes of the detector without interpolation of the optical bundle. The photodiodes are connected to transimpedance amplifiers. Each channel comprises more than one AC-coupled stage for amplifying further, level matching and filtering the obtained electrical signal. An electrical signal proportional to the incident light power appears on the output of the analogue amplifier module 52. In a further embodiment, a further electrical signal proportional to the average incident light power also appears on the output of said analogue amplifier module 52.

The analogue amplifier module 52 is connected to an analogue-to-digital converter module 53 of said controlling and evaluating unit 16, which digitizes the output signals of the analogue amplifier module 52 channel by channel and transmits them to a signal processing unit 54.

The signal processing unit 54 determines the parameters of the digitized electric pulses, for example their peak values, lengths in time, average values, integrals, signal shapes, that correspond to the light scattered by said objects 40 and are generated on the output of the analogue amplifier module 52 and then are digitized by the analogue-to-digital converter module 53. Then, an evaluation unit 55 of the controlling and evaluating unit 16 derives from these parameters the physical properties of the objects 40 in the sample. If needed, the obtained physical properties can be displayed and/or stored for a later usage in an appropriate storage medium.

To control/position the illuminating laser beam 32, based on a part of the parameters determined by said signal processing unit 54, a control unit 56 governs the beam moving device 20 by means of a motor 58 through a motor driving means 57 and an appropriate transmission, as will be discussed below in detail.

It should be noted that in an embodiment of said controlling and evaluating unit 16 the analogue-to-digital converter module 53, the signal processing unit 54, the evaluation unit 55 and the control unit 56 (or one or more thereof) can be replaced by a properly programmed computer that provides for digitizing the analogous electrical signals, evaluating the digitized signals, as well as displaying (in the form of e.g. scatter plots illustrating the populations of the formed elements in the sample separately) and storing, if needed, the obtained results and adjusting the illuminating laser beam 32 based on said results, be it either desired or required.

FIG. 1 illustrates an embodiment of an optical flow cytometer. The elements of the fluorescence light collector module collect and transmit the part of the fluorescent light emitted from the colored particles 100 moving in the flow cell 22 into the detector element which is a multi-element avalanche photo diode with a special power supply and operation amplifiers with pulse output and low pass filtered output. In case of single photon reaching the detector surface of the detector element, a single fix time (10-100ns) fix peak voltage (50-100mV) pulse appears in the pulse output. The number of the pulses in the pulse output is proportional to the number of the photons reaching the detector surface in case of low light level. In case of higher light levels, the possibility of multiple photon hits increases and the pulses are overlapping in the pulse output. The time of the overlapped pulses are the same as a single pulse but the peak voltage of the pulses is many times higher than a single pulse peak voltage because many photons hit the detector surface in the same time.

This pulse output is transmitted to the low pass filter and a filtered pulse appears in the low pass filtered output. The -3dB point of the filter (f) is calculated from the speed of the colored particles 100 passing the flow cells 22 (v), and the height of the illuminating laser spot 102 parallel of the sample flow 205 in the plan of flow cell 22 (h).

$$f = \frac{2v}{h}$$

The steepness of the said low pass filter is at least 40dB/decade. The average voltage proportional to the light level illuminate the surface of the detector. The output of the low pass filter is connected to input of an analog to digital converter, it can be a part of the signal processing unit 54.

The pulse output of the detector element is connected to the smith-trigger to convert the analogue signal to a digital signal. The digital signal is transmitted to the pulse counter, it can be a part of the signal processing unit 54 to count said pulses during a time interval. The digital signal is transmitted to the input of the signal processing unit which re-calculates the pulse number coming from the detector element to reduce the effect of signal transmission and detection destroying physical phenomena and to enable the linear alignment of the signals in the pulse output and low pass filtered output. The signal processing unit uses the pulse output signal in case the fluorescent light level is lower than a defined limit and uses the output of the low pass filter in case that fluorescent light levels are higher than a defined limit.

As it is well known the non-zero dark pulse number and pulse coincidence are the two major physical effect destroy the feasibility of the detector element to give output pulse number is directly proportional to photon number falls into the detector element's surface. In case of no light falls into the detector surface there are non-zero feasibility of an output pulse generation in the pulse output of the detector element, this effect depends on the temperature and type of the detector element and the power supply voltage of the detector element. The said signal processing unit extracts a fixed number of pulses to compensate the non-zero dark pulse number (offset). In case of increasing light level illuminate the detector element's surface there are increasing feasibility of multiply photon falls into the surface of the detector element. This multiply photon falls generate overlapped pulse in the pulse output, time of the pulse is similar as the single pulse, but the voltage of the pulse is multiplied. The signal processor unit cannot make different between the single and the multiply pulses, in this way the part of the pulses are not counted, this pulse coincidence effect give an increasing diversity the number of the photons fall into the multi-element avalanche photodiode array and the number of pulses counted in a time period. There is a linearization function in the signal processing unit compensate the effect of the coincidence event

In embodiments of an optical flow cytometer the elements of the side scatter light collector module collect and transmit the part of the scattered light scattered from the particles 100 moving in the flow cell 22 into the detector element which is a photodiode or avalanche photodiode. The said detector connects the input of a trans-impedance amplifier and comprises more than one AC-coupled stage for amplifying further, level matching and filtering the obtained electrical signal. The output of the said analogue amplifier connected to the input of the analogue to digital converter of said controlling and evaluating unit 16. An electrical signal proportional to the incident light power appears on the output of the analogue amplifier module 52. The signal processing unit 54 determines the parameters of the digitized electric pulses, for example their peak values, lengths in time, average values, integrals, signal shapes, that correspond to the light scattered by said objects 40 and are generated on the output of the analogue amplifier module 52 and then are digitized by the analogue-to-digital converter module 53. Then, an evaluation unit 55 of the controlling and evaluating unit 16 derives from these parameters the physical properties of the objects 40 in the sample.

The optical unit 14 comprises a transmitter module 18 providing the illumination needed for the measurement to be performed, an optional beam moving device 20, a flow cell 22 and an optical fiber bundle 24 or a direct light detector, all arranged in a light path, and fluorescence light collector module collect the light emitted or scattered from the said painted particles 100 and transmit a part of this light into the detector element.

The fluorescence light collector module contains light collector elements 70 and fiber coupling elements 71 and an optical fiber 72 arranged perpendicular to the light path at the flow cell 22. These elements collect the said light emitted or scattered from the particles 100 and couple it into the said optical fiber 72. The optical fiber 72 transmits the said emitted or scattered light into the filter module witch contain a condenser lens 73,75 one or more optical filter(s) 74 with wavelength dependent transmission coefficient and a coupling element arranged in an optical axis witch transmit the higher wavelength fluorescence light coming from the painted particles 100 into the multi-element avalanche photodiode array detector and block the lower wavelength scattered light coming from the particles 100 or coming from the laser source and reflected from the other optical elements like flow cell 22.

There are clean up filter element to change the laser source intensity profile depend on the wavelength. There is pass band close the wave length of laser source where the said laser beam 32 go throw the filter with the possible minimum absorption, and there is a stopband in the emitting wavelength of fluorescent dye where the said laser beam 32 go throw the filter with the possible maximum absorption depend on wavelength.

The fluorescent dye as is well known, paints the cellular elements of the whole blood in different degree, depend on the physical, chemical and biological property of the elements. The physiologic properties like maturity of the cellular elements modulates the said physical, chemical and biological property and modify the paint degree through this. During the whole blood or other cellular components or fluorescently painted particles 100 travel in the centerline of the sample flow area 221 where a part of the laser light striking said objects. The fluorescent dye is excited by the said laser and a part of the energy of the laser emitted back as a longer wavelength fluorescent light. In this way the intensity of the emitted fluorescent light from the painted particle 100 depend on the physiologic properties of the said particles 100.

In what follows, the hydro-pneumatic unit 12 of the flow cytometer 10 according to the invention and its operation is discussed in detail with reference to Figures 1.

The task of the hydro-pneumatic unit 12 of the flow cytometer 10 according to the invention is to produce the sample solution of a sample to be analyzed that is suitable for being assayed in an optical type of analysis, to prepare the thus obtained sample solution for the analysis and then to feed it into the flow passage 22a of the flow cell 22 and to form it to the appropriate cross section at a constant volume rate, as well as to advance it through said passage 22a during the measurement.

Said production and preparation of the sample solution comprises mixing the sample to be assayed with the various reagents and fluorescence dyes, as well as controlling temporal and spatial course of the (bio)-chemical reactions taking place within the mixture (in particular, adjusting the volume ratios of the reagents to be mixed up, the incubation times and the temperature) - all that is performed in a biochemical preparation unit 64. The biochemical preparation unit contain the reagents and aspirates the sample required to the said preparation. The biochemical preparation unit 64 is known per se. In some case the primer biological sample contain originally asymmetric particles 100 like erythrocytes and thrombocytes outside other particles 100. These particles 100 are shaped like a bi-conical disk or dial and it has smaller and a bigger diameter the smaller diameter is the symmetry axis of the disk and the bigger diameter is perpendicular to it. The biochemical preparation unit prepare the biological sample and create the sample solution by adding reagent(s), for instance sphering agent which known per se and incubate it in the proper temperature and time. The sphering agent or other reagents can change the shape of the asymmetrical particles 100. The particles 100 are partially or fully puffs up by the reagents. The prepared sample solution contains asymmetric particles 100 in different state depend on the reagents are applied. There are some asymmetric particles 100 with original shape because the reagent does not puff it up. There are some asymmetric particles 100 partially spherical shape because it puffed up partially by the used reagents or spherical shape particle 100.

Feeding the prepared sample solution into the flow cell 22 takes place through special cell connector element 66 that provides simultaneously for a hydrodynamical focusing and cross section forming of said sample solution and the orientation fixing of the of the particle in the sample solution and the fluidic connection between the sample branch 62 and the sheath branch 63 as well.

The hydro-pneumatic unit 12 comprises a closed liquid flow path extending between a starting point and an end point. Said liquid flow path consists of a sample branch 62 and a sheath liquid branch 63 that extends parallel to one another in the embodiment disclosed. The starting point of the sample branch 62 and of the sheath liquid branch 63 is a tank 77 kept at a certain (atmospheric) pressure for storing the sheath liquid. To the sample branch 62 close to the cell connector element 66, a sample preparation unit 64 and close to the common end of the two branches a sheath pump, are connected through valves Vm, Vd. The biochemical preparation unit 64 insert the said prepared sample into the sample branch 62 trough the valve Vm during the measurement preparation. The sample branch 62 and the sheath liquid branch 63 meet in the cell connector element 66, from here they run together through the passage 22a to the end point. At the end point of the hydro-pneumatical unit 12, a vacuum tank 59 at a pressure lower than the pressure maintained in said tank 77 by about 0.35 to 0.70 bar is arranged, vacuum tank 59 is for receiving and optionally also for collecting the sample solution leaving the flow cell 22.

Said liquid flow path between the starting point and the end point is provided by conduits that branches away, according to needs. The sample pump 111 and the biochemical preparation unit 64, the cell connector element 66 and the flow cell 22 are inserted into said conduits one after the other (in the given order) in a flow direction that points from the starting point to the end point. Moreover, upstream said cell connector element 66, in flow direction before it, two-way cross valves Vd, Vm and Vt, and a are inserted into the sample branch 62 and into the sheath liquid branch 63, respectively.

The sample flow 205 exiting from the flow cell 22 reaches the vacuum tank 59 via a valve Vv. One of the inlets of the cross valve Vd is in fluid communication with the sample pump 111, while the remaining inlet thereof is connected into the sheath liquid branch 63 . The outlet of the cross valve Vd is in fluid communication with the inlet of the cross valve Vm. While the remaining inlet of the cross valve Vm is in fluid communication with the biochemical preparation unit 64. The outlet of the cross valve Vm is in fluid communication with the inlet of the cross-valve Vt. One of the outlets of the cross valve Vt opens into the cell connector element 66, while the remaining outlet thereof is connected into the flow path through a bypass 65 in flow direction between the flow cell 22 and the valve Vv. Said cross valves Vm, Vt,Vd and the valves Vv, are precision valves that influence the flow conditions prevailing within the hydro-pneumatical unit 12.

FIG. 2-5 illustrates embodiments of a cell connector element 66 and the flow cell 22. The cell connector element 66 has a hollow structure which forms a fluidic T-connector, provides simultaneously for a hydrodynamical focusing and orientation fixing of the particles 100 cross section forming of said sample flow 205 and the fluidic T connection between the a sample branch 62 and a sheath liquid branch 63 and the flow cell 22 as well. The hollow of the cell connector element 66 is filed with sheath fluid reagent and sample solution and this liquids flowing through the cell connector element 66 from the sample branch 62 and a sheath liquid branch 63 to the flow cell 22 and forming the sample flow 205 and the sheath flow 206 and the combined flow 220 so as to facilitate the analysis of said cellular elements. The composition of sheath fluid reagent and dilution reagent of sample solution are known per se. These fluids be able to model as a Newton-type fluid with viscosity close to the water, temperature is room temperature, the flow is laminar. It is to be noted that it necessary for obtaining a highly efficient cell orientation to have a wedge-shaped tip injector and an elliptical sheath cross section around or before the injection point and further a circular combined flow cross section behind it. Only an element with such an arrangement and geometry will ensure to obtain the desired orientation. Separation of the elements as shown in US 2013/020498 A1 will result in a loss of properly orientated cells. If the nozzle contains both, wedge-shaped tip sample injector and elliptical flow formation element, the ratio of the cross oriented cells is 11.1 %. If the sample injector does not have a wedge-shaped tip. the ratio of cross oriented cells to properly orientated cells increases up to 27,7%. For the plate flow it is not important to use a wedge-shaped tip sample injector, because the needed plate flow is totally controllable by the flow formation element.

The cell connector element 66 consists of a sample injector 200 and sheath preparation element 201a,b,c,d a common flow formation element 202a,b,c,d. The sample injector 200 feeds the said prepared sample solution into the cell connector element 66. The outer surface of the sample injector 200 and the inner surface of the sheath preparation element 201a,b,c,d form a tube to feed and form the cross section the sheath fluid. The common flow formation element 202a,b,c,d connect to the sheath preparation element 201a,b,c,d in the plain of the sample injector 200 end and form the said liquid T connector. The flow cell 22 connect to the other end of the common flow formation element 202a,b,c,d. The sheath liquid branch 63, sheath preparation element 201a,b,c,d common flow formation element 202a,b,c,d and the flow cell 22 follow in this order in the direction of flow. The sample branch 62, sample injector 200 follow in this order in the direction of flow. The connection point of the two branches is in the end plane of the sample injector 200, perpendicular to the flow passage 22a of the flow cell 22. The symmetry of the hollow interposed by the cell connector element 66 changes along the flow from the sample branch 62 to the flow cell 22. Close to the connection of sample branch 62 the said hollow is rotationally symmetric, around the end plain of the sample injector 200 the said hollow is flattened cross section, there are a smaller and a bigger diameter and the direction of the bigger diameter is perpendicular to the plate flow and the illuminating laser beam 32. Around the connection of the flow cell 22 the hollow is rotationally symmetric again.

FIG. 2 illustrates an embodiment of the cell connector element 66 and the flow cell 22, wherein said embodiment comprises: sample injector 200 and a truncated cone shape sheath preparation element with circular to elliptical shrinking cylindrical shape 201a where the major axis of the ellipse is perpendicular to the plate flow, and common flow formation element with modified truncated cone shape 202a where the cross section in the end plate of the injector 203 is elliptical the cross section in the connection plane of the flow cell 204 is circular.

FIG. 3 illustrates an embodiment of the cell connector element 66 and the flow cell 22, wherein said embodiment comprises: sample injector 200 and a truncated cone shape sheath preparation element with circular to elliptical shrinking truncated conical shape 201b where the major axis of the ellipse is perpendicular to the plate flow and the ratio of the small axis and the major axis of the ellipse is one to eight, and common flow formation element 202b with modified truncated cone shape where the cross section in the end plate of the injector 203 is elliptical the cross section in the connection plane of the flow cell 204 is circular.

FIG. 4 illustrates an embodiment of the cell connector element 66 and the flow cell 22, wherein said embodiment comprises: sample injector 200 and a truncated cone shape sheath preparation element with circular to elliptical shrinking truncated conical shape 201c where the major axis of the ellipse is perpendicular to the plate flow and the ratio of the small axis and the major axis of the ellipse is one to four, and common flow formation element 202c with modified truncated cone shape where the cross section in the end plate of the injector 203 is elliptical the cross section in the connection plane of the flow cell 204 is circular.

FIG. 5 illustrates an embodiment of the cell connector element 66 and the flow cell 22, wherein said embodiment comprises: sample injector 200 with truncated cone shape, and a sheath preparation element with square to rectangle shrinking truncated pyramid shape 201d where the major edge of the rectangle is perpendicular to the plate flow, and common flow formation element 202d with modified truncated pyramid shape where the cross section in the end plate of the injector 203 is rectangle the cross section in the connection plane of the flow cell 204 is square.

To perform a measurement, all three major components of the flow cytometer 10 according to the invention are activated. In particular, the hydro-pneumatical unit 12 prepares to produce a sample flow apt for being measured and to deliver it into the flow cell 22, the optical unit 14 generates the laser beam 32 required for the desired irradiation of the flow cell 22, while the controlling and evaluating unit 16, in case of need, provides for an appropriate adjustment/positioning of the illuminating spot 102 of the laser beam 32, as will be discussed later in more detail.

Before commencing the measurement, the reagent branch 63 and the sample branch 62 and the flow cell 22 and the cell connector element 66 are filled up with reagents (e.g. also with the sample aspirated into the biochemical preparation unit 64 and the said preparation are done, the sample solution is created), the sheath tank 60 storing said sheath liquid.

After completing the above filling up, the valve Vv is opened and the biochemical preparation unit 64 inject the sample solution through the cross valve Vm and Vt and the bypass 65 and Vv into the vacuum tank 59. The tubing between the valves Vm and Vt contains a part of the sample solution after said injection. Then, cross valve Vt and Vm which are arranged in the sample branch 62 change to a position in which they conduct from the sheath tank 60 towards the cell connector element 66, and due to the already mentioned pressure difference, the sample solution will pass towards the vacuum tank 59 through the cell connector element 66. In order to deliver (that is, to feed) the prepared sample flow 205 to the cell connector element 66 relatively rapidly, it is preferred to keep the valve Vs within the sheath liquid branch 63 temporarily in its closed position.

After completing the above feed up, the valve Vs within the sheath liquid branch 63 changes into an open position. Subsequently, due to the already mentioned pressure difference, the sample solution will pass towards the vacuum tank 59 through the cell connector element 66. When the valve Vs is opened, due to the pressure difference a flow of sheath liquid commences in the sheath liquid branch 63 towards the vacuum tank 59 through the cell connector element 66 and the flow cell 22.

Due to its geometrical construction, said cell connector element 66 places the sample solution coming from the sample branch 62 into the centerline of the sheath liquid flow coming from the sheath liquid branch 63 and reduces its cross-sectional size to a cross-section that is smaller than the cross-section of the passage 22a of the flow cell 22. The sheath flow 206 in the plane of the connection of the sheath branch has a circularly symmetrical cross section (circular or square cross section), the sheath preparation element 201a,b,c,d form the sheath flow 206 to a flattened cross section (elliptical or rectangle cross section) in the plain of the sample injection. There is a smaller and a bigger axis of the sheath flow 206 and the bigger axis of the sheath flow 206 is perpendicular to the plan flow in the flow cell 22. The velocity of the sheath flow 206 and the sample flow 205 is typically identical in the plane of the sample injection the two flows are not mixed and create a combined flow 220. Because of the laminar flow there is a sample flow area 221 where the liquid coming from the sample branch 63 and sheath flow area 222 where the liquid coming from the sheath branch 63, are separated inside the combined flow. This combined flow 220 goes through the common flow formation element 202a,b,c,d which narrows the combined flow 220 and forms it to a circularly symmetrical cross section (circular or square cross section) again. The cross section of the sample flow area 221 in the plane of the sample injection is determined by the inner form of the sample injector 200, it is typically circular. Due to the different compression ratio parallel and perpendicular to the 'plane flow', the common flow formation element 202a,b,c,d realigns the combined flow 220 and compresses the flow in a varying degree in different directions. The bigger compression ratio results in a flattened sample flow area 221 perpendicular to its direction. The sample flow area 221 cross section is changed from circular to 'plane flow' along the axis of the common flow formation element 202a,b,c,d. The bigger asymmetry of the combined flow 220 in the plate of the injection result bigger asymmetry of the sample flow area 221 in the connection of the flow cell 22. The thus obtained composite stream, i.e. the sample surrounded by the sheath liquid flows from the cell connector element 66 into the passage 22a of the flow cell 22. Said flow is laminar, and thus the sheath liquid and the sample do not mix up, the formed sample flow area 221 do not changes its cross section along the passage 22a of the flow cell 22. The combined flow 220 cross the laser beam 32, and the 'plat flow' is parallel to the direction of the laser beam.

In some cases, the sample solution may contain asymmetric particles 100 as an original shape, or which are partially spherical shaped as described above. Such particles 100 are referred to as prepared asymmetric particles 100. The orientation of these particles 100 is random when the sample flow 205 passes over the sample injector, but in the combined flow formation element the prepared asymmetric particles 100 keep turning into a settled orientation as the combined flow 220 passes through the common flow formation area. The smaller axis of these particles 100 is in the connection plane of the flow cell 204 is perpendicular to the 'plane flow'. If the size of the particles 100 in the sample flow area 221 has a similar size like the smaller axis of the sample flow area 221 and the particles 100 are not symmetrical shaped like red blood cells, the formation of the sample flow turns the element into the similar angular position.

During passage through the flow passage 22a, the sheath liquid keeps the sample the whole time at the centerline of the passage 22a and the orientation of the prepared asymmetric particles 100 does not change. To create and maintain the laminar flow, the flow velocities of the sample flow 205 and the sheath liquid flow entering the cell connector element 66 should be about identical at the entry point of the sample flow. It is noted that the velocity of the sample solution can vary slightly around its optimal value without destroying the laminar flow.

An adjustment of the adequate velocities takes place by the flow impedances of the sample branch 62 and the sheath liquid branch 63. The ratio of the volume flow rates setting in within the two branches is inversely proportional to the ratio of impedances of those portions of the entire liquid flow path that form said two branches and uniquely defines the cross-sectional area of the developing sample flow. Consequently, the cross-section area of the sample solution travelling in the flow passage 22a of the flow cytometer 10 according to the invention can eventually be controlled (to a small extent) by varying the ratio of the flow impedance of the sample branch 62 to the flow impedance of the sheath liquid branch 63. In particular, by increasing the impedance of the sample branch 62 (e.g. by reducing the number of reagent branches) or by decreasing the impedance of the sheath liquid branch 63, the cross-sectional area of the sample flow area 221 decreases, and vice versa. As a consequence, the measurement can be performed on a stable sample flow 205 with no fluctuations, which allows to derive more precise results. It is noted that the size of a pressure drop building up along the liquid flow path as a whole can be changed by a valve Vv inserted between the flow cell 22 and the vacuum tank 59; said valve Vv can be e.g. an electronically controlled precision valve of variable flow rate. It is also noted that the ratio of the flow velocity in the sample branch 62 to the flow velocity in the sheath liquid branch 63 can be adjusted in a given range arbitrarily and set to a desired value by means of the valve Vs. Hence, formation of the laminar flow of the sample solution and the sheath liquid can be facilitated within the cell connector element 66.

Another embodiment refers to a condition, when the equal velocity in the cell connector element are set by the sample pump 111 for the sample fluid and by the pressure different between the vacuum tank 59 and the tank 77 and the amount of fluidic resistance of the sheath liquid branch 63 and the cell connector element 66 and the flow cell 22 for the sheath flow.

At the same time, the laser source 26 emits the illuminating laser light that reaches the flow cell 22 in form of the laser beam 32 that had gone through a beam shaping 33 controlled by control unit 56 and irradiates the liquid stream flowing in the passage 22a. The sample surrounded by the sheath liquid and prepared biochemically or stained by a fluorescence dye as required and flowing through the flow cell 22 crosses the illuminating laser beam 32. Meanwhile, a portion of light of said laser beam 32 is spatially scattered by the objects 40 of said sample. Another part of the illuminating laser beam 32 is absorbed by the fluorescently stained particles 100 and a part of the absorbed laser energy is emitted as a longer wavelength light.

As already described, the angular position of the prepared asymmetric particles 100 is fixed to the 'plane flow' and to the illuminating laser beam. When the illuminating laser light reaches the prepared asymmetric particles 100, the angular distribution of the scattered light depends on the angular position of the particle 100 relative to the detector, but it is fixed relative to the laser system. Thus, the angular distribution of the scattered light relative to the detector is the same for every particle 100, because of the spatial situation, just depending on the physical and biological properties of the said particles 100. There is a similar situation concerning the angular distribution of the particle's absorption and emission factors. There is no particle 100 to particle change of absorption and emission factors due to a change of the angular position relative to the illumination and detection system, because the angular position of the said particles 100 is fixed into the 'plane flow' and the laser system.

Depending on the construction of the used flow cell 22, said laser beam 32 is absorbed, deflected from its initial direction or transmitted by the flow cell 22. The scattered light leaving the flow cell 22 in a definite spatial region (here, in accordance with Figure 2, in a low-angle region that forms an angle with the optical axis falling between about 1.5° and about 3°, and in a high-angle region that forms an angle with the optical axis falling between about 4° and about 8°; further spatial regions can also be defined, if desired) reaches the common end 42 of the optical fiber bundle 24, where it couples into the elementary optical fibers as already described, said light then reaches via the offtake bundles 24-1, ..., 24-p sensing surfaces of the sensing elements A1, ..., Ap located on the input of the amplifier module 52 where it generates adequate electrical signals. Or said scattered light will reach the surface of the direct detector and the segment of the direct detector is connected to the input of the amplifier module 52. And a part of the said scattered light and fluorescently emitted light may go through the fluorescent light collector module and will be coupled into the optical fiber, go through the filter module and will be focused into the multi-element avalanche photodiode array detector. The thus obtained electrical signals are then processed in a manner already described.

After the sample to be measured went through passage 22a in its entire length, by changing over the cross valve Vm, along with an open position of the valves Vv and Vs and an unaltered position of the cross valve Vt, due to the existing pressure difference only sheath liquid will flow through the cell connector element 66 and the flow passage 22a that performs a cleaning/flushing of said elements and thus prepares the flow cell 22 for the measurement of the following sample.

It is to be noted here that when cross valves Vm, Vt and the valves Vs, Vv of the flow cytometer 10 according to the invention are properly adjusted (that is, by their setting into closed/opened positions, as desired), the steps of filling-up, mixing, feeding and measuring can be effected merely by the difference in pressures prevailing within the vacuum tank 59 and the tank 60 storing the sheath liquid, as is clear in view of the previous disclosure for a skilled person in the art.

In summary: in case of using an optical flow cytometer according to the present invention discussed merely with reference to some embodiments but to such an extent that allows a full understanding of its operation,

- illumination of the sample to be assayed, in particular by formed elements in a sample of human or animal whole blood, takes place by a diode laser source, a collimator, a plano-convex lens and a cylindrical lens.
- detection of the light emitted by the illuminated fluorescent painted sample to be assayed, in particular by formed elements in a sample of human or animal whole blood, takes place by multi-element avalanche photodiode array detector, contains two outputs, one pulse output and a filtered output connected to a linearizing and offsetting element.
- during the assay and feeding, the advancement of the prepared sample, in particular of the sample of human or animal whole blood, takes place in a specific hydro-pneumatical device, wherein the blood sample moves in the flow cell to a narrowed sample flow area 221 cross-section due to the cell connector element;
- the sample passes the flow cell due to the pressure difference between the starting point and the end point of the liquid flow path, wherein said sample flow area 221 cross-section is defined by a ratio of the flow impedance of the sample branch 62 to that of the sheath liquid branch or due to the positive displacement pump.

Advantages of the invention can be summarized as follows:

a. In the current solution, the laser source is a cheap elliptical divergent beam source, no anamorphic elements and contain PCX and a cylinder lens, this is more robust and need less adjustment.
b. The multi-element avalanche photodiode array detector with the two-channel amplifier combines the photon counting capabilities of the PMTs and the linearity range and robustness of silicon detectors.
c. The presently described system is able to create the needed 'plate flow', by the especial design of the element connected to the flow cell and can increase the sample flow 205 volume.

The foregoing description of the embodiment of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents. The entirety of each of the aforementioned documents is incorporated by reference herein.

**Claims**

1. An optical flow cytometer for performing assays in vitro with cellular components in a liquid sample, comprising

   a. an optical unit (14) for illuminating a sample, said optical unit (14) comprising an elliptical divergent laser beam source for generating a laser beam (32), a collimating laser optic, a plano-convex lens and a cylindrical lens, and
   b. a unifying element (66) connected to a flow cell (22) at a connection plane (204) of the flow cell (22), wherein the flow cell (22) and the unifying member (66) comprises a common furcating flow channel from the end point of the flow cell (22) crossing the connection plane (204) of the flow cell (22) to the entry points of the unifying member (66), wherein the flow cell (22) has at its connection plane a circular or quadrant shape and the unifying member (66) comprises a first section between an entry point for a liquid sample flow (205) and a sheath flow (206) on one end and an end plate of a sample injector (203) and a second section between the end plate of the sample injector (203) and the connection plane of the flow cell (204), wherein

   i. the first section of the unifying member (66) comprises a sample injector (200) that is connected to a sample branch (62) at the entry point, wherein the sample injector (200) is concentrically and symmetrically located within a sheath preparation element (201), wherein the inner diameter of the sample injector (200) for transporting the liquid sample flow is constant, and wherein the sheath preparation element (201) has a symmetrical shape at its connection with a sheath liquid branch (63) at the entry point, and the diameter of the sheath preparation element (201) decreases continuously towards the entry of a passage (22a) of flow cell (22) for the liquid sample at least in the direction of the axis of the illuminating laser beam; and
   ii. the second section of the unifying member (66) comprises a common flow formation element (202) that conically reduces its inner diameter in direction towards the connection plane of the flow cell (204), wherein the openings of sample injector (200) and sheath preparation element (201) merge into the common flow formation element (202) so that the sheath flow surrounds the liquid sample flow in a resulting composite stream and wherein the cross section of the flow formation element (202) is asymmetrical with the longer extension of the cross section being perpendicular arranged to the optical axis of a laser beam, at least at the end plat of the sample injector (203).

2. The optical flow cytometer of claim 1, wherein the flow cell (22) is made of a transparent material.

3. The optical flow cytometer of claim 1 or 2, wherein the shape of the end plate of sample injector (203) is circular or rectangular.

4. The optical flow cytometer of any one of claims 1 to 3, wherein the light path of the laser beam is perpendicular to a passage (22a) for the sample in the flow cell (22).

5.  The optical flow cytometer of any one of claims 1 to 4, further comprising a detection unit for evaluating and controlling the sample, said detection unit comprising a multi-element avalanche photo diode array and detector member.

6.  The optical flow cytometer of claims 5, wherein the multi-element, avalanche, photo diode array, detector module (76) is connected to a low pass filter for transmitting a pulse output.

7.  The optical flow cytometer of claim 5 or 6, wherein the optical unit (14) and the detection unit share a common optical axis.

8.  The optical flow cytometer of any one of claims 1 to 7, further comprising at least a first optical coupling element capable of collecting beams exiting from the flow cell (22).

9.  The optical flow cytometer of any one of claims 7 or 8, further comprising a second optical coupling element rotated by ninety degree in relation to the first optical coupling element capable of collecting light exiting from the flow cell.

10. The optical flow cytometer of claim 9, further comprising a first and a second optical sensing element of first and second optical coupling element, which are capable of generating electrical signals in conformity with the spatial distribution of the beams incident on said first or second sensing surface.

11. The optical flow cytometer of any one of claims 1 to 10, further comprising a signal processing unit (54) electrically connected with at least one optical sensing element.

12. The optical flow cytometer of any one of claims 1 to 11, wherein the cross section of the flow formation element is rectangular or perpendicular with a longer extension of the cross section being perpendicular arranged to the optical axis of the laser beam at least at the end plate of the sample injector (203).

13. The use of a flow cytometer according to any one of claims 1 to 12 for measuring simultaneously in vitro at least one property of an element or cellular component of a biological sample, wherein the at least one property is selected from the group comprising size, shape, internal granularity, maturity and corpuscular volume.

**FIG. 1**

**FIG. 2**

**FIG. 3**

**FIG. 4**

FIG. 5

**FIG. 6**

**FIG. 7**

**FIG. 8**

**FIG. 9**

**FIG. 10**

**FIG. 11**

**FIG. 12**

Europäisches
Patentamt

European
Patent Office

Office européen
des brevets

# EUROPEAN SEARCH REPORT

Application Number

EP 20 18 8702

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2013/020498 A1 (EBI RYUICHIRO [JP] ET AL) 24 January 2013 (2013-01-24) * abstract; figures 1-16 * * paragraphs [0057] - [0099] * ----- | 1-13 | INV. G01N15/14 |
| Y | WO 01/40765 A2 (XY INC [US]; BUCHANAN KRISTOPHER S [US]; HERICKHOFF LISA [US]) 7 June 2001 (2001-06-07) * abstract; figures 1-5 * * page 8, lines 18-20 * * page 11, line 3 - page 14, line 15 * ----- | 1-13 | |
| Y | WO 2010/043917 A1 (DIATRON MI ZRT [HU]; MENDELE BALINT TIBOR [HU] ET AL.) 22 April 2010 (2010-04-22) * abstract; figures 1-16 * * page 12, line 22 * * page 21, line 24 - page 22, line 2 * ----- | 1-13 | |
| Y | WO 2015/084676 A1 (IRIS INT INC [US]) 11 June 2015 (2015-06-11) * abstract; figures 1-6A * * page 42, line 3 - page 46, line 21 * ----- | 1-13 | TECHNICAL FIELDS SEARCHED (IPC) G01N |

The present search report has been drawn up for all claims

| Place of search | Date of completion of the search | Examiner |
|---|---|---|
| The Hague | 30 November 2020 | Zarowna-Dabrowska, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 771 899 A1**

## ANNEX TO THE EUROPEAN SEARCH REPORT
## ON EUROPEAN PATENT APPLICATION NO.

EP 20 18 8702

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2020

| Patent document cited in search report | | Publication date | Patent family member(s) | | Publication date |
|---|---|---|---|---|---|
| US 2013020498 | A1 | 24-01-2013 | CN | 102890049 A | 23-01-2013 |
| | | | JP | 2013024629 A | 04-02-2013 |
| | | | US | 2013020498 A1 | 24-01-2013 |
| WO 0140765 | A2 | 07-06-2001 | AR | 026683 A1 | 19-02-2003 |
| | | | AR | 036412 A2 | 08-09-2004 |
| | | | AR | 053878 A2 | 23-05-2007 |
| | | | AR | 053879 A2 | 23-05-2007 |
| | | | AT | 467113 T | 15-05-2010 |
| | | | AU | 783000 B2 | 15-09-2005 |
| | | | BR | 0016121 A | 25-02-2003 |
| | | | CA | 2393121 A1 | 07-06-2001 |
| | | | CA | 2739572 A1 | 07-06-2001 |
| | | | CA | 2822851 A1 | 07-06-2001 |
| | | | CN | 1402831 A | 12-03-2003 |
| | | | DK | 1238261 T3 | 30-08-2010 |
| | | | DK | 2180307 T3 | 17-02-2014 |
| | | | DK | 2264430 T3 | 23-04-2018 |
| | | | EP | 1238261 A2 | 11-09-2002 |
| | | | EP | 2180307 A2 | 28-04-2010 |
| | | | EP | 2264430 A2 | 22-12-2010 |
| | | | ES | 2342922 T3 | 19-07-2010 |
| | | | ES | 2445520 T3 | 03-03-2014 |
| | | | GB | 2372466 A | 28-08-2002 |
| | | | HK | 1143860 A1 | 14-01-2011 |
| | | | HU | 0300587 A2 | 28-06-2003 |
| | | | JP | 5019497 B2 | 05-09-2012 |
| | | | JP | 5762939 B2 | 12-08-2015 |
| | | | JP | 2003515337 A | 07-05-2003 |
| | | | JP | 2012047760 A | 08-03-2012 |
| | | | KR | 20020063584 A | 03-08-2002 |
| | | | KR | 20070058710 A | 08-06-2007 |
| | | | KR | 20070058711 A | 08-06-2007 |
| | | | MX | PA02005488 A | 24-09-2002 |
| | | | NZ | 519275 A | 28-01-2005 |
| | | | PL | 355812 A1 | 17-05-2004 |
| | | | TW | 538243 B | 21-06-2003 |
| | | | US | 6263745 B1 | 24-07-2001 |
| | | | US | 2002005076 A1 | 17-01-2002 |
| | | | US | 2002129669 A1 | 19-09-2002 |
| | | | US | 2004050186 A1 | 18-03-2004 |
| | | | UY | 26469 A1 | 29-12-2000 |
| | | | WO | 0140765 A2 | 07-06-2001 |
| WO 2010043917 | A1 | 22-04-2010 | EP | 2347243 A1 | 27-07-2011 |
| | | | HU | 227875 B1 | 29-05-2012 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 20 18 8702

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2020

| Patent document cited in search report | Publication date | Patent family member(s) | | Publication date |
|---|---|---|---|---|
| | | US | 2011256523 A1 | 20-10-2011 |
| | | WO | 2010043917 A1 | 22-04-2010 |
| WO 2015084676 A1 | 11-06-2015 | CN | 105940292 A | 14-09-2016 |
| | | EP | 3077790 A1 | 12-10-2016 |
| | | WO | 2015084676 A1 | 11-06-2015 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7113266 B
- US 20090066936 A
- US 763839 A
- US 20040043506 A1
- US 4988619 A
- US 5007732 A
- US 5150037 A
- US 5985216 A
- US 6365106 B1
- US 2013020498 A1